(19) Europäisches Patentamt
European Patent Office
Office européen des brevets

(11) Publication number: **0 254 483 B1**

# (12) EUROPEAN PATENT SPECIFICATION

(45) Date of publication of patent specification: **03.04.91**

(51) Int. Cl.5: **F16K 31/06**

(21) Application number: **87306288.9**

(22) Date of filing: **16.07.87**

## (54) Solenoid-operated fluid pressure regulator valves.

(30) Priority: **24.07.86 US 888683**
**24.02.87 US 17932**

(43) Date of publication of application:
**27.01.88 Bulletin 88/04**

(45) Publication of the grant of the patent:
**03.04.91 Bulletin 91/14**

(84) Designated Contracting States:
**DE FR GB**

(56) References cited:
**DE-A- 3 006 302**
**DE-C- 847 465**
**US-A- 3 688 607**

(73) Proprietor: **GENERAL MOTORS CORPORATION**
**General Motors Building 3044 West Grand Boulevard**
**Detroit Michigan 48202(US)**

(72) Inventor: **Albertson, William Conrad**
**14430 Rice Drive**
**Sterling Heights Michigan 48078(US)**

(74) Representative: **Denton, Michael John et al**
**Patent Section Vauxhall Motors Limited 1st Floor Gideon House 26 Chapel Street**
**Luton Bedfordshire LU1 2SE(GB)**

**EP 0 254 483 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to fluid valve assemblies as specified in the preamble of claim I, for example as disclosed in US-A-3 688 607.

As is commonly known in this art, solenoid-operated valves such as those used in automatic transmission control systems are fully microprocessor-compatible, but typically suffer from high hysteresis, ineffective control at very low temperatures, and non-linearity. Furthermore, such solenoid-operated valves are generally over-sensitive to supply-pressure variation, exhibit low flow capacity, pulsate the control pressure, exhibit substantial power requirements, and degrade with prolonged duty. Such pressure regulator valves typically depend on the residence time of a valve element (or valve elements) at each extreme of travel, operate independently of any pressure feedback, and/or are force-dependent upon particular valve element positions urged by the solenoid.

The present invention is concerned with providing a relatively simple solution to these problems.

To this end a fluid valve assembly in accordance with the present invention is characterised by the features specified in the characterising portion of claim I.

A fluid valve assembly in accordance with the present invention thus achieves the required result by combining a linear solenoid with an asymmetrical spool valve.

The fluid valve assembly in accordance with the present invention has the potential to utilise the combination of a linear solenoid and an asymmetrical spool valve to provide fluid pressure regulation and also circuit sequencing.

The linear solenoid, which is also known as a proportional solenoid, shunts off magnetic lines of force with core movement, so as to provide force output on the valve that is a function of coil current independent of core position.

In a specific embodiment of a fluid valve assembly in accordance with the present invention, in the form of a solenoid-operated fluid pressure regulator valve, the spool valve has spaced lands of unequal diameter arranged to open and close an exhaust port and a supply port to a regulated-pressure port and to provide an unbalanced area that is acted on by the regulated pressure so as to effect a regulated pressure force on the spool valve in the force balance of the same and thereby produce an internal pressure feedback. During regulation, the asymmetrical spool valve thus operates as an internal pressure feedback pressure regulator, and the linear solenoid operates as a current-to-force transducer that is independent of core and thereby valve position over its operating range.

By this interaction of the current dependence/position independence of force output of the linear solenoid and the pressure feedback of the asymmetrical spool valve, the port communications are made a function of relative levels of force generated by the solenoid and the spool valve, and in the case of high pressure also an opposing spring force. The controlled or regulated pressure is a result of a balance of these forces, and thus the effect of varying supply pressure is substantially reduced, while relatively high flow capacities can be provided, with minimum pulsation of the controlled pressure.

Furthermore, lower power is required and the flow rate is substantially unaffected by duty cycle.

Moreover, the supply port can be eliminated, and the device then used as an electrically variable two-port pressure relief valve having high flow capabilities which allow supply pressure regulation.

In addition, such a two-port arrangement can also be plumbed to provide an electrically adjustable sequencing of fluid circuits.

In the drawings:

Figure I is a longitudinal sectional view of one embodiment of a fluid valve assembly in accordance with the present invention as adapted as a solenoid-operated fluid pressure regulator valve to establish a clutch control pressure in a motor vehicle automatic transmission control system;

Figure 2 is a longitudinal sectional view similar to Figure I, but of a three-port, normally low-pressure version of a fluid valve assembly in accordance with the present invention as adapted as a solenoid-operated fluid pressure regulator valve;

Figure 3 is a graph illustrating the force-stroke characteristics of the solenoid-operated fluid pressure regulator valves shown in Figures I and 2;

Figures 4 and 5 are graphs illustrating the hysteresis characteristics at different fluid temperatures of the solenoid-operated fluid pressure regulator valves shown in Figures I and 2;

Figure 6 is a longitudinal sectional view similar to Figure I but of a two-port solenoid-operated fluid valve assembly in accordance with the present invention as adapted as a fluid pressure regulator valve; and

Figure 7 is a longitudinal sectional view similar to Figure I but of another embodiment of a two-port solenoid-operated fluid valve assembly in accordance with the present invention as adapted as a fluid pressure regulator valve.

With reference now to the drawings, there is shown in Figure I a fluid valve assembly in the form of a solenoid-operated fluid pressure regulator valve assembly generally designated I0 that is adapted to operate with oil as an operating medium in a transmission control system so as to alternatively communicate a supply line I2 and an exhaust line I4 with a control line I6 so as to provide a linearly variable normally high control pressure in the control line I6, to operate for example a converter clutch slip control (not shown).

The valve assembly I0 generally comprises an asymmetrical spool valve I8 operated by a linear (proportional) solenoid 20 to control communication between the supply and exhaust lines I2 and I4 and the control line I6.

In the spool valve section of the valve assembly I0, a cylindrical valve housing 22 is received in a bore 24 of a manifold 26 to which the lines I2, I4 and I6 are ported as shown. The valve housing 22 has axially spaced annular grooves 28, 30 and 32 in the exterior thereof that are open in the manifold bore 24 to the respective lines I2, I4 and I6, and communicate the same via diametrically opposite ports 34, 36 and 38 respectively with the interior of the valve housing. The latter is formed with a stepped bore 39 therethrough having a large-diameter portion 40 and a small-diameter portion 42 which respectively receive a large-diameter land 44 and a small-diameter land 46 formed on the spool valve I8, and with the components being oriented so that the large-diameter land controls the exhaust ports and the small-diameter land controls the supply ports.

The valve lands 44 and 46 are axially spaced such that the control (regulated) pressure ports 38 remain open to the space between the lands throughout the movement of the spool valve I8 between its supply and exhaust positions, whereby in the supply position shown in Figure I the small land 46 opens the supply pressure ports 34 while the large land 44 closes the exhaust pressure ports 36 to the control pressure ports 38, and in the exhaust position, upon upward valve movement, the large land opens the exhaust ports and the small land closes the supply ports to the control pressure ports, to thus effect fluid supply or exhaust for the latter ports.

Furthermore, although it is preferred that the supply, exhaust and control ports be formed in pairs as shown, they can alternatively be formed as single ports, or in a greater number of divisions, depending on various design and/or manufacturing considerations. In any event, however, the spool valve is considered to comprise basically a three-port arrangement, having namely a supply port, an exhaust port and a control port.

The linear solenoid 20 of the solenoid-operated fluid pressure regulator valve assembly I0 comprises a bobbin assembly 50 formed of two flanged end pieces 52 and 54 joined together by means of a sleeve 56. A coil (winding) 58 is wrapped about and on the bobbin assembly, and is covered by a cylindrical shroud 60. The bobbin end piece 54 and thereby the solenoid is secured by means of a threaded connection 6I to the valve housing 22. A bushing 62 is fixedly mounted in a bore 64 extending through the bobbin end piece 54, and slidably receives a plunger formed by a shaft 66 that at its upper end 68 engages the spool valve I8 and at its lower end is secured by means of a threaded connection 70 to a core 72.

The core 72 is movable with the shaft 66 within the bobbin sleeve 56, and has an exterior conical shape 74 at its upper end that is receivable within a correspondingly shaped interior conical section 76 of the bobbin end piece 54, to thereby reduce the air gap and, on upward core movement, shunt the flux from the position shown, to provide the desired linearity between current and core displacement.

A plug 78 is threaded in the upper end of the valve housing 22, and a coil return spring 80 received between the plug 78 and the upper end of the spool valve acts to urge the latter downwardly against the solenoid shaft 66, downward movement of which is limited to the fully retracted position shown by a snap ring 82 that is retained in an annular groove on the shaft 66 and engages the upper end of the bushing 62.

The coil return spring 80 normally biases the spool valve to this fully retracted (supply) position shown, wherein the exhaust ports 36 are closed by the large spool valve land 44 but the control pressure ports 38 are open past the small land 46 to the supply ports 34.

The solenoid coil 58 is connected to a DC power supply 84 by means of a controller 86 of conventional design that incorporates a pulse-width-modulated driver circuit and is programmed to provide the desired valve functions.

With the controller supplying no current to the coil 58, the spring 80 is adjusted to provide a preload to overcome the differential spool force only, and to provide a desired maximum control pressure (usually supply pressure), the differential spool force being the force produced by the control pressure acting between the lands 44 and 46 on the unbalanced area of the larger land 44.

The spool valve lands 44 and 46 form therebetween a variable flow area path between the ports, and if the pressure in the control ports should rise above the desired level, the differential spool force and any additive solenoid force will then work to overcome the spring force to cause the spool valve to move in the direction of communicating the control ports with the exhaust ports. Alternatively, should the pressure in the control ports drop below the desired pressure, the spring force will overcome the combined forces of the differential spool valve and any additive solenoid force, and cause the spool valve to move in the direction of communicating the control ports with the supply ports, to thereby increase the control pressure.

When the control pressure is at the desired pressure level, the forces balance, and the spool valve is in a position that does not allow communication of the control ports with either the supply ports or the exhaust ports.

Since the control pressure is the result of such balance of forces, including that of the solenoid, and since the output force of the solenoid is proportional to the current supplied thereto and independent of spool valve position, operation of the controller to supply and vary current to the solenoid is effective to accurately adjust the control pressure to the desired level of control pressure in a linear manner, thereby causing the control pressure to decrease from a maximum at the lowest current in proportion to increasing current supply (see curve 88 in Figures 4 and 5).

Furthermore, since the solenoid current is controlled by a pulse-width-modulated driver circuit, with the pulsing nature of the current affecting the amplitude of movement of the solenoid core and thus of the spool valve, the amplitude is thus controlled by the pulse-width-modulated frequency, and serves to reduce hysteresis. As a result, there is provided a highly desirable linear force versus valve stroke characteristic, as depicted in Figure 3, with practically no hysteresis at a low operating transmission oil temperature such as 33 °C, as shown by the closed-loop curve 88 in Figure 4, as well as at a high operating temperature of l00 °C, as shown by the closed-loop curve 90 in Figure 5 (the graphs in Figure 4 and 5 being plots of control pressure against current to the solenoid coil).

With conventional time-modulated solenoid-actuated valve systems, high force levels with short time constants are normally required to minimise and stabilise valve member position transition time. To achieve high force levels with short time constants, these devices normally require solenoids of relatively high power and low inductive reactance. Fluid valve assemblies in accordance with the present invention do not depend on time modulation, and therefore inherently require less power.

Moreover, valve member transition time is not a critical factor in fluid valve assemblies in accordance with the present invention, and thus longer and larger-area ports can be used to increase the flow to very high rates.

For those uses in which the control pressure is normally low, there is provided a three-port low-pressure version of a pressure regulator valve constituting a fluid valve assembly in accordance with the present invention, as shown in Figure 2, wherein the same reference numerals as in Figure l but primed (in the fashion N') designate structure and related matter similar to that in Figure l.

Specifically, in the normally low-pressure version the valve assembly l0' is reversed relative to the solenoid 20', and the spring 80', which is now of larger diameter, is positioned about the solenoid plunger 66' between a radially outwardly projecting annular seat l00 formed thereon and an annular seat l02. The annular seat l02 is formed on the bobbin end piece 54' at a place formerly occupied by the lower end of the plunger bushing 62', which has been shortened accordingly and remains fixed in the bore 64'.

With such re-arrangement, the fluid pressure force from the differential spool area then works against the linear solenoid to effect a force balance to control the pressure at the control ports 38'. For example, with no solenoid current the differential spool force works to move the valve l8' downwardly to communicate the control ports 38' with the exhaust ports 36' and provide minimum pressure at the former ports.

Variations in the control pressure are accomplished in the same manner as with the normally high-pressure device shown in Figure l except for the reversed placement of the supply and exhaust ports and spool valve asymmetry. As a result, the solenoid current, which remains proportional to output force, is then generally inversely proportional to the desired control pressure.

The return spring 80' has a substantially lower rate than the corresponding spring 80 in Figure l, and is set with a low preload to, in this instance, just ensure opening of the exhaust ports to provide zero pressure at minimum or zero current. The spring 80' does not in this version present a significant force in the balancing of the valve forces to control the pressure, and can be omitted where such exhaust port opening assurance is not an important factor.

As with the high-pressure device shown in Figure l, the low-pressure device shown in Figure 2 has been found to exhibit practically no hysteresis in low-pressure usage at the low fluid operating temperature of 33 °C, as shown by the closed-loop control pressure versus solenoid current curve 88' in Figure 4, as well as at the high fluid operating temperature of l00 °C, as shown by the closed-loop curve 90' in Figure 5.

Certain fluid power systems such as those with a pump deliver specific output pressures that are inversely proportional to the output flow. At various supply operating conditions, the levels of pressure and flow may change, but this overall inverse relationship remains. With these systems, the line pressure is a function of the total output flow and supply conditions (eg pump speed and fluid temperature). A further variation of the solenoid-operated fluid valve assembly, in the form of a solenoid-operated fluid pressure regulator valve, in accordance with the present invention is operable to adjust the total system output flow to regulate system supply line pressure, and is shown in Figure 6 as configured for normally high-pressure use.

In this version, wherein the same reference numerals as in Figure I but double-primed (in the fashion N″) are used to designate structure similar to that in Figure I, the intermediately located control ports and associated circuit are omitted, resulting in a two-port arrangement wherein the supply line pressure at the supply ports 34″ acts on the unbalanced area of the spool valve I8″ to produce a force that acts in concert with the controllable force of the solenoid 20″ to oppose the force of the return spring 80″. When supply pressure increases above a predetermined level, the fluid force and solenoid force together overcome the return spring force, and the spool valve I8″ moves to increase the open flow area of the exhaust ports 36″, to thus increase total system flow and thereby lower the supply system pressure. In the case in which system pressure is lower than the predetermined level, as may for example be due to an increase in flow in some other part of the system or a lower pump speed, the fluid force acting on the spool valve is lower, and the return spring then forces the spool valve to move so as to reduce the open exhaust flow area at the exhaust ports 36″, to thus reduce the flow and thereby raise the system pressure.

Moreover, with the two-port version effecting flow that is proportional to system supply pressure, a fast response/variable offset can be applied through the action of the linear solenoid. With these control actuator characteristics coupled to the fluid supply characteristics, variable pressure/flow equilibrium points can thus be achieved. Furthermore, the two-port version of the solenoid-operated pressure regulator valve can be configured in a normally low-pressure configuration, as well as the normally high-pressure configuration shown in Figure 6, in the same manner as the three-port low-pressure version shown in Figure 2.

Many fluid power circuits are configured so that a certain sequence of separate actuation events occur, based on a rising pressure in a single control line. Automatic adaptive schemes are almost impossible to implement, since adjustments to time between phases are typically required, and are very difficult to accomplish in such devices after initial calibration. The two-port version of the solenoid-operated pressure regulator valve shown in Figure 7 forms a readily variable fluid-sequencing device to meet such needs. In this version, wherein the same reference numerals are used as in Figure I but triple-primed (in the fashion N‴) to designate structure similar to that in Figure I, the intermediately located control ports are omitted, as in the two-port version in Figure 6, but in this instance the remaining ports 34‴ and 36‴ are connected by way of the lines I2‴ and I4‴ to a primary and a secondary circuit respectively.

The primary circuit ports 34‴ allow a rising pressure signal that is applied to a controlled device (not shown) earlier in the sequence to also be applied to act on the differential area of the spool valve I8‴. As before, the fluid force thereby generated acts in conjunction with the variable force of the linear solenoid 20‴ in opposition to the force of the return spring 80‴.

Communication between the ports 34‴ and 36‴ is prevented until the primary circuit pressure at the former ports rises to a predetermined level established by the opposing solenoid and spring forces. When such level is reached, however, the spool valve I8‴ moves to uncover the secondary ports 36‴, and thus allow pressure to rise in the secondary circuit as a result of connection of the line I2‴ to the line I4‴.

The Figure 7 device thus provides a rapidly variable control for sequencing two fluid lines (circuits). Moreover, this device can also be configured in a normally open manner wherein the secondary circuit would communicate with a rising primary circuit until the latter reached a predetermined pressure level, and above this level the device would block interconnection of the two circuits so that the circuits could then operate separately.

## Claims

1. A fluid valve assembly comprising a spool valve (18) having lands (44,46) which are axially spaced and of unequal diameter; and at least two ports (12,14,16) which are radially arranged relative to the spool valve, communication between the ports being controlled by the axial position of the lands; characterised by a solenoid (20) comprising a core (72) connected to a shaft (66) which is in axial alignment with the spool valve (18) and acts thereon, the core and shaft being axially movable relative to an end piece (54), the core having an exterior conical shape (74) at one end which corresponds to, and is received in, an interior conical shape (76) on the end piece, to define an air gap therebetween and hence define a flux path for the solenoid which is movable dependent on the size of the air gap; by a controller (86) connected to the solenoid for providing pulse-width-modulated current thereto for affecting the amplitude of movement of the core and the spool valve; and in that one of the ports provides a control pressure which acts on the spool valve and the core; the arrangement being such that the flux path effects an output force on the core (72) that is proportional to current supplied to the solenoid (20) and independent of core position within a finite displacement range, and such that the lands (44,46) form therebetween a variable-area flow path between the ports (12,14,16) and also a fluid pressure-unbalanced area acted on by fluid pressure at the control pressure port (16) to ultimately control the communication thereby between the ports (12,14,16).

**2.** A fluid valve assembly according to claim 1, wherein the control pressure is imposed on the spool valve (18) in a direction opposing the output force on the core (72).

**3.** A fluid valve assembly according to claim 1, wherein spring means (80) acts on the spool valve (18) in a direction opposing the output force on the core (72), and wherein the control pressure imposed on the spool valve (18) acts in the same direction as the output force.

**4.** A fluid valve assembly according to any one of claims 1 to 3 for fluid pressure regulation; wherein the ports (12,14,16) comprise a supply port (12), and an exhaust port (14) as well as a control pressure port (16), the spool valve (18) alternatively communicating the supply port (12) and the exhaust port (14) with the control pressure port (16) to establish a regulated pressure in the control pressure port (16), with the unbalanced area of the spool valve (18) being acted on by the regulated pressure so as to effect a regulated fluid pressure force on the spool valve (18).

**5.** A fluid valve assembly according to claim 4, wherein the regulated pressure acts on the unbalanced area between the lands (44,46) of the spool valve (18) such that the regulated fluid pressure force on the spool valve (18) is effective to balance the spool valve (18) in such pressure regulation.

## Revendications

**1.** Ensemble valve à fluide comprenant un tiroir (18) qui possède des portées (44, 46) qui sont espacées axialement et de diamètres différents ; et au moins deux orifices (12, 11, 16) qui sont disposés radialement par rapport au tiroir, la communication entre les orifices étant commandée par la position axiale des portées ; caractérisé par un électro-aimant (20) qui comprend un noyau (72) relié à une tige (66) qui se trouve dans l'alignement axial du tiroir (18) et agit sur ce tiroir, le noyau et la tige étant mobiles dans la direction axiale par rapport à une pièce d'extrémité (54), ledit noyau ayant à une extrémité une forme extérieure conique (74) qui correspond à une forme intérieure coniquo (76) de la pièce d'extrémité et qui est reçue dans cette forme pour définir un entrefer entre le noyau et la pièce d'extrémité et pour définir de cette façon un circuit de flux magnétique pour l'électro-aimant qui est mobile en fonction de la largeur de l'entrefer ; par un contrôleur (86) connecté à l'électro-aimant pour lui transmettre un courant modulé en largeur d'impulsions pour agir sur l'amplitude du mouvement du noyau et du tiroir ; et en ce qu'un des orifices donne une pression de commande qui agit sur Le tiroir et sur le noyau ; l'agencement étant tel que le circuit de flux magnétique exerce sur le noyau (72) une force de sortie qui est proportionnelle au courant fourni à l'électro-aimant (20) et indépendante de la position du noyau dans un intervalle fini de distances de déplacement ; et tel que les portées (44, 46) forment entre elles un trajet d'écoulement à surface de section variable entre les orifices (l2, 14, 16) et également une surface de section non équilibrée en pression de fluide qui subit l'action de la pression du fluide régnant à l'orifice de pression de commande (16) pour commander finalement de cette façon la communication entre les orifices (12, 14, 16).

**2.** ensemble valve à fluide selon la revendication 1, dans lequel la pression de commande est imposée au tiroir (18) dans le sens qui s'oppose à la force de sortie exercée sur le noyau (72).

**3.** Ensemble valve à fluide selon la revendication 1, dans lequel des moyens élastiques (80) agissent sur le tiroir (18) dans le sens qui s'oppose à la force de sortie exercée sur le noyau (72) et dans lequel la pression de commande imposée au tiroir (18) agit dans le même sens que la force de sortie.

**4.** Ensemble valve à fluide selon une quelconque des revendications àl à 3, destiné la régulation d'une pression de fluide ; dans lequel les orifices (12, 14, 16) comprennent un orifice d'alimentation (12) et un orifice de décharge (14), ainsi qu'un orifice de pression de commande (16), le tiroir (18) mettant alternativement l'orifice d'alimentation (12) et l'orifice de décharge (14) en communication avec l'orifice de pression de commande (16) oour établir une pression régulée dans l'orifice de pression de commande (16), la surface de section non équilibrée du tiroir (18) subissant l'action de la pression régulée de façon à faire agir une force de pression de fluide régulée sur le tiroir (18).

**5.** Ensemble valve à fluide selon la revendication 4, dans lequel la pression régulée agit sur la surface de section non équilibrée entre les portées (44, 46) du tiroir (18) de telle manière que la force de pression de fluide regulée qui agit sur le tiroir (18) agisse pour êquilibrer le tiroir (18) dans cette régulation de la pression.

## Ansprüche

**1.** Fluidventilanordnung, die umfaßt ein Schieberventil (18) mit Stegen (44, 46), die in Axialrichtung Abstand voneinander besitzen und von ungleichem Durchmesser sind; und mindestens zwei Anschlüsse (12, 14, 16), die relativ zu dem Schieberventil radial angeordnet sind, wobei Verbindung zwischen den Anschlüssen durch die Axialstellung der Stege gesteuert wird; gekennzeichnet durch einen Elektromagneten (20), der umfaßt einen Kern (72), der mit einer Welle (66) verbunden ist, die in axialer Ausrichtung mit dem Schieberventil (18) ist und darauf einwirkt, wobei der Kern und die Welle relativ zu einem Endstück axial (54) bewegbar sind, der Kern eine konische Außenform (74) an einem Ende besitzt, die einer konischen Innenform (76) an dem Endstück entspricht und in ihr aufgenommen ist, um einen Luftspalt dazwischen zu bestimmen und damit einen Flußpfad für den Elektromagneten zu bestimmen, der in Abhängigkeit von der Größe des Luftspaltes bewegbar ist; durch eine mit dem Elektromagneten zur Schaffung eines Impulslängen-modulierten Stromes für diesen verbundene Steuerung (86), um die Bewegungsamplitude des Kerns und des Schieberventils zu beeinflussen; und dadurch, daß einer der Anschlüsse einen Steuerdruck schafft, der auf das Schieberventil und den Kern einwirkt; wobei die Anordnung so ist, daß der Flußpfad eine Ausgangskraft auf den Kern (72) bewirkt, die zu dem dem Elektromagneten (20) zugeführten Strom proportional und in einem begrenzten Verschiebungsbereich unabhängig von der Kernlage ist und so, daß die Stege (44, 46) dazwischen einen Strömungspfad mit variabler Flächengröße zwischen den Anschlüssen (12, 14, 16) bilden und auch eine Fluiddruck-unausgeglichene Fläche, auf die durch Fluiddruck an dem Steuerdruck-Anschluß (16) eingewirkt wird um schließlich dadurch die Verbindung zwischen den Anschlüssen (12, 14, 16) zu steuern.

**2.** Fluidventilanordnung nach Anspruch 1, bei der der Steuerdruck auf das Schieberventil (18) in einer der Ausgangskraft auf den Kern (72) entgegenwirkenden Richtung ausgeübt wird.

**3.** Fluidventilanordnung nach Anspruch 1, bei der Federmittel (80) auf das Schieberventil (18) in einer der Ausgangs-kraft auf den Kern (72) entgegengesetzten Richtung wirkt, und bei der der auf das Schieberventil (18) ausgeübte Steuerdruck in der gleichen Richtung wie die Ausgangskraft einwirkt.

**4.** Fluidventilanordnung nach einem der Ansprüche 1 bis 3 zur Fluiddruckregelung; bei der die Anschlüsse (12, 14, 16) einen Zuführanschluß (12), einen Abführanschluß (14), wie auch einen Steuerdruckanschluß (16) umfassen, wobei das Schieberventil (18) abwechselnd den Zuführanschluß (12) bzw. den Abführanschluß (14) mit dem Steuerdruckanschluß verbindet, um einen geregelten Druck in dem Steuerdruckanschluß (16) einzurichten, wobei auf die unausgeglichene Fläche des Schieberventils (18) der regulierte Druck so einwirkt, daß eine regulierte Fluiddruckkraft auf das Schieberventil (18) bewirkt wird.

**5.** Fluidventilanordnung nach Anspruch 4, bei der der regulierte Druck auf die unausgeglichene Fläche zwischen den Stegen (44, 46) des Schieberventils (18) so einwirkt, daß die regulierte Fluiddruckkraft auf das Schieberventil (18) zum Ausgleichen des Schieberventils (18) bei einer solchen Druckregelung wirksam ist.

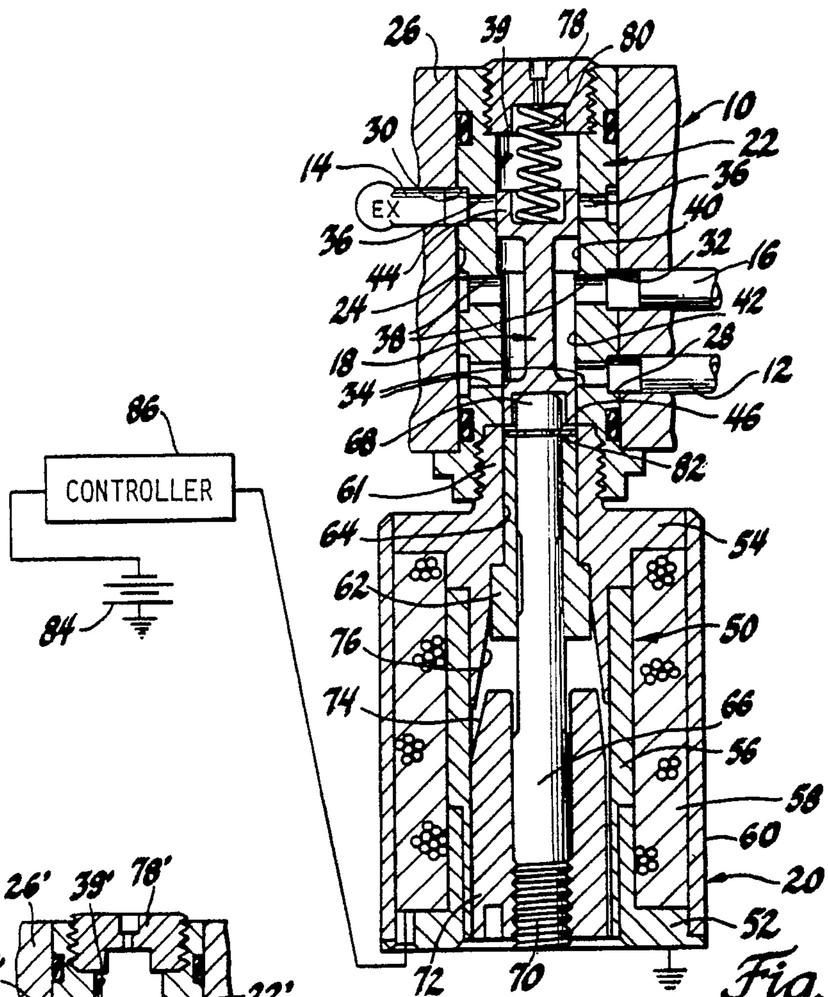


Fig. 1

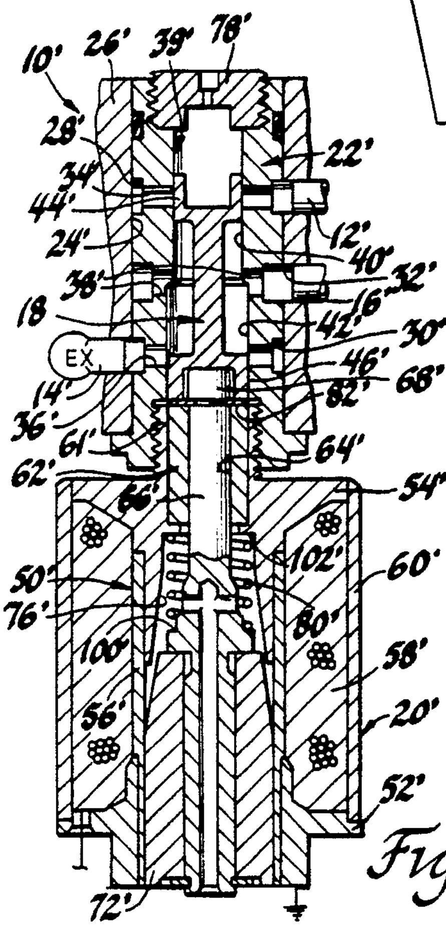


Fig. 2

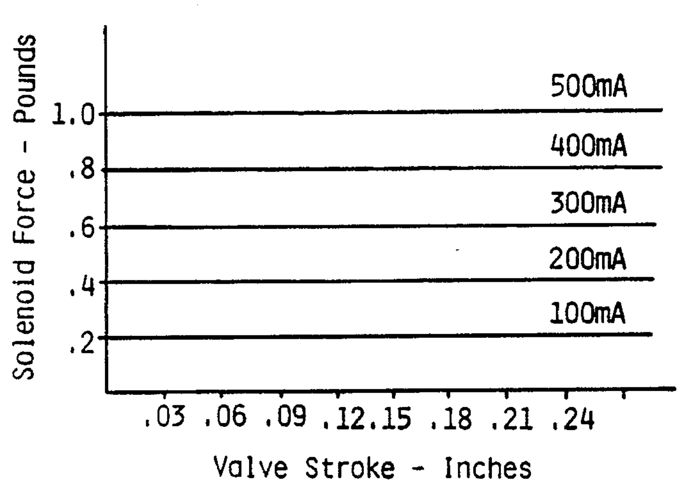


Fig. 3

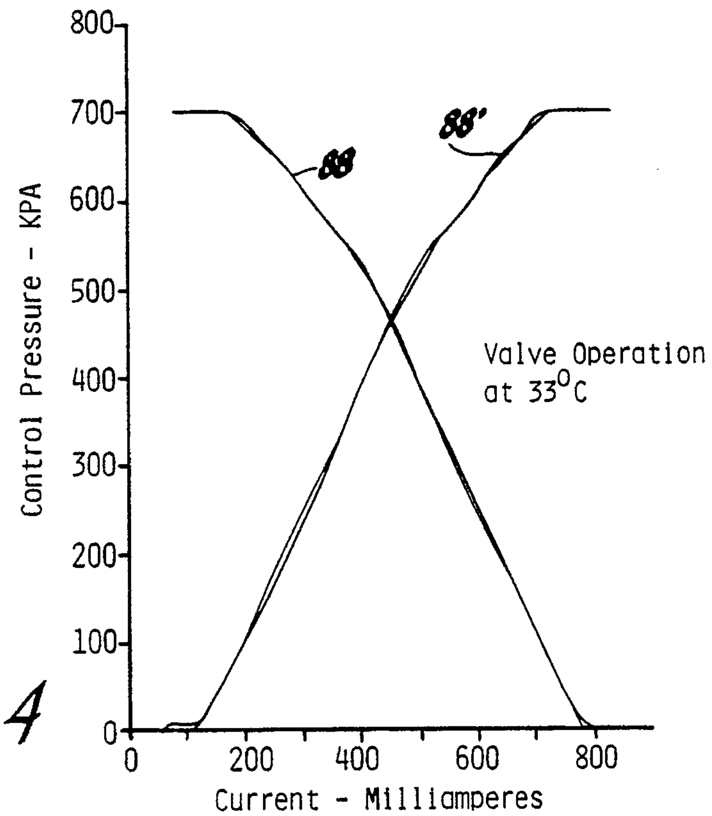
800
700
600
500
400
300
200
100
0
Control Pressure - KPA
88
88'
Valve Operation
at 33°C
0
200
400
600
800
Current - Milliamperes

Fig.4

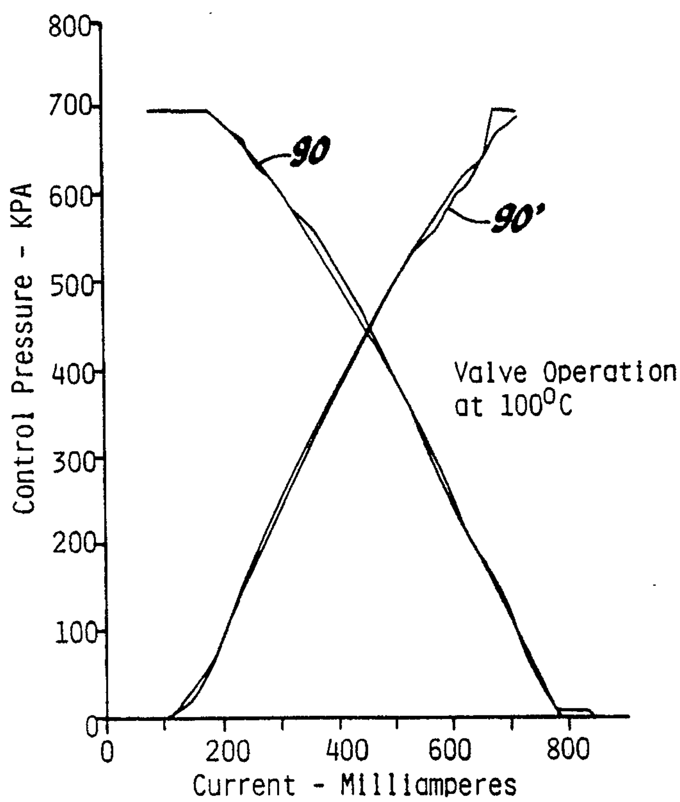
800
700
600
500
400
300
200
100
0
Control Pressure - KPA
90
90'
Valve Operation
at 100°C
0
200
400
600
800
Current - Milliamperes

Fig.5

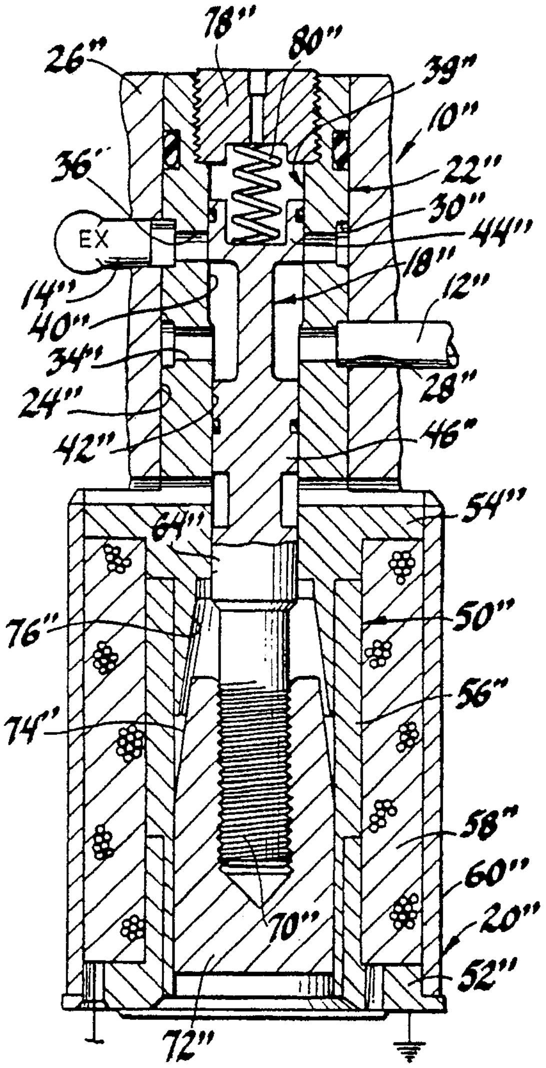
26"
78"
80"
39"
10"
36'
22"
30"
EX
44"
14"
18"
40"
12"
34"
24"
28"
42"
46"
54"
64"
50"
76"
56"
74"
58"
60"
70"
20"
52"
72"

Fig.6

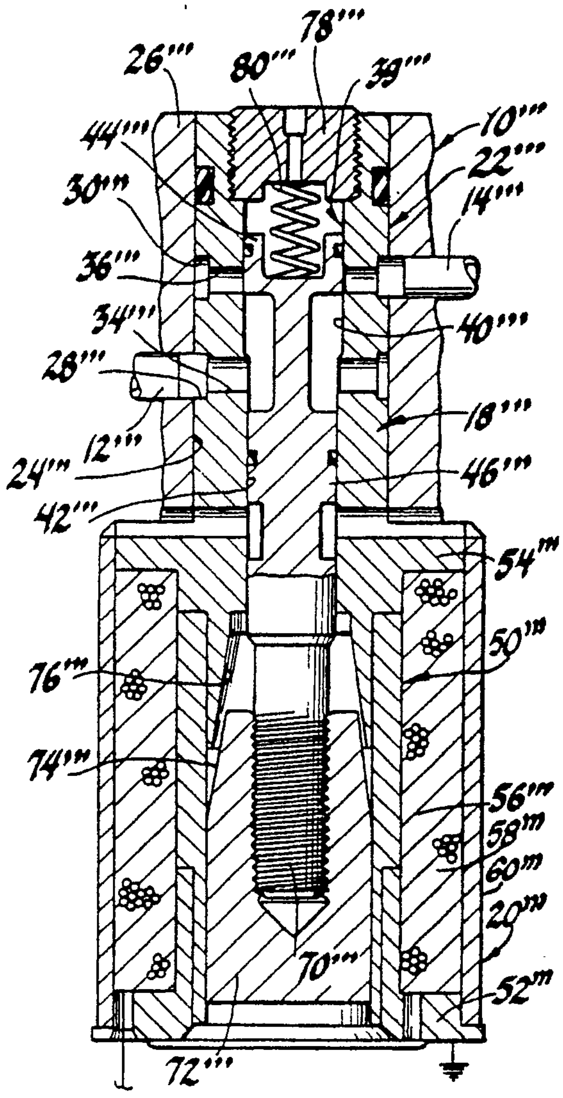
78'''
26'''
80'''
39'''
10'''
44'''
22'''
30'''
14'''
36'''
34'''
40'''
28'''
18'''
24'''
12'''
46'''
42'''
54'''
76'''
50'''
74'''
56'''
58'''
60'''
70'''
20'''
52'''
72'''

Fig.7